# EUROPEAN PATENT APPLICATION

(11) **EP 4 797 456 A1**
(43) Date of publication of application: **26.08.2026**
(21) Application number: 24879805.0
(22) Date of filing: 18.10.2024
(51) Int. Cl.: H01R 4/58, H01M 50/50, H01M 50/588, H01M 50/591

(54) **CONNECTION MODULE AND BATTERY PACK**

(30) Priority: 18.10.2023 JP 2023179407
(71) Applicant: AESC Japan Ltd., Yokohama-shi, Kanagawa 220-0012 (JP)
(72) Inventor: IWATA, Yoshihisa, Zama-shi, Kanagawa 252-0012 (JP); NAKAI, Masayuki, Zama-shi, Kanagawa 252-0012 (JP); MATSUURA, Moritaka, Zama-shi, Kanagawa 252-0012 (JP)
(74) Representative: Mathys & Squire
(86) International application number: PCT/JP2024/037103
(87) International publication number: WO 2025/084384

(57) **Abstract**

A connection module (10) includes a first bus bar (11) coated with a first resin (11a), a second bus bar (12) coated with a second resin (12a), and a plurality of resin connecting portions (13). The resin connecting portion (13) connects the first bus bar (11) and the second bus bar (12). The resin connecting portion (13) is connected to the first resin (11a) and the second resin (12a). A space (14) is formed between the plurality of resin connecting portions (13).

## Description

### TECHNICAL FIELD

The present invention relates to a connection module and a battery pack.

### BACKGROUND ART

A technique related to a plurality of bus bars that are mold-formed is disclosed in, for example, Patent Document 1.

In addition, a technique related to an insert molding method capable of suppressing deformation of a bus bar during mold-forming is disclosed in, for example, Patent Document 2.

### RELATED DOCUMENT

### PATENT DOCUMENT

Patent Document 1: US Patent Application Publication No. 2020/0106198
Patent Document 2: Japanese Unexamined Patent Publication No. 2011-143711

### SUMMARY OF THE INVENTION

### TECHNICAL PROBLEM

In a case where a bus bar that is mold-formed in a battery pack receives an impact from the outside, there is a concern that a resin portion is crushed and a metal portion of the bus bar is exposed. In a case where the metal is exposed, there is also a risk of short circuit.

An example of an object of the present invention is to suppress exposure of a metal portion of a bus bar that is mold-formed.

### SOLUTION TO PROBLEM

The invention according to Claim 1 is a connection module including a first bus bar that is coated with a first resin, a second bus bar that is coated with a second resin, and a plurality of resin connecting portions that are made of a resin and that connect the first bus bar and the second bus bar, in which the resin connecting portion is connected to the first resin and the second resin, and a space is formed between the plurality of resin connecting portions.

### ADVANTAGEOUS EFFECTS OF INVENTION

According to the above-described aspect of the present invention, it is possible to suppress exposure of a metal portion of a bus bar that is mold-formed.

### BRIEF DESCRIPTION OF THE DRAWINGS

[FIG. 1] A schematic perspective view of a battery pack according to a first embodiment.
[FIG. 2] A schematic perspective view of a connection module according to the first embodiment, in which a portion A in FIG. 1 is enlarged.
[FIG. 3] A plan view when viewed from an upper direction in FIG. 2.
[FIG. 4] A schematic perspective view of a connection module according to the second embodiment, in which a portion A in FIG. 1 is enlarged.
[FIG. 5] A plan view when viewed from an upper direction in FIG. 4.

### DESCRIPTION OF EMBODIMENTS

Hereinafter, an embodiment of the present invention will be described with reference to the drawings. In all drawings, the same constituent elements are denoted by the same reference signs, and detailed description thereof will not be repeated.

### <First Embodiment>

### (Battery Pack 1)

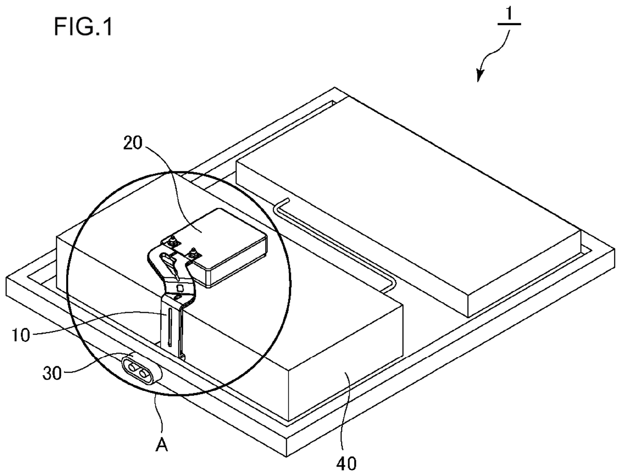

FIG. 1 is a schematic perspective view of a battery pack 1 according to a first embodiment. In the first embodiment, the battery pack 1 is mounted on an automobile as an example. Specifically, the battery pack 1 is mounted between front wheels and rear wheels of the automobile. Hereinafter, the battery pack 1 will be described as being mounted in the automobile unless otherwise specified. However, the battery pack 1 can also be applied to applications other than the automobile.

The battery pack 1 according to the first embodiment includes a connection module 10, a junction box 20, a connector 30, and a battery module 40. The junction box 20 is provided on an upper surface of the battery module 40. Inside the junction box 20, for example, wiring is stored together with electronic components such as a resistor, a relay, and a fuse. The connector 30 is a portion that connects the battery pack 1 to an external device. The connector 30 may be, for example, a connector connected to a high-voltage device or a connector connected to a low-voltage device.

### (Connection Module 10)

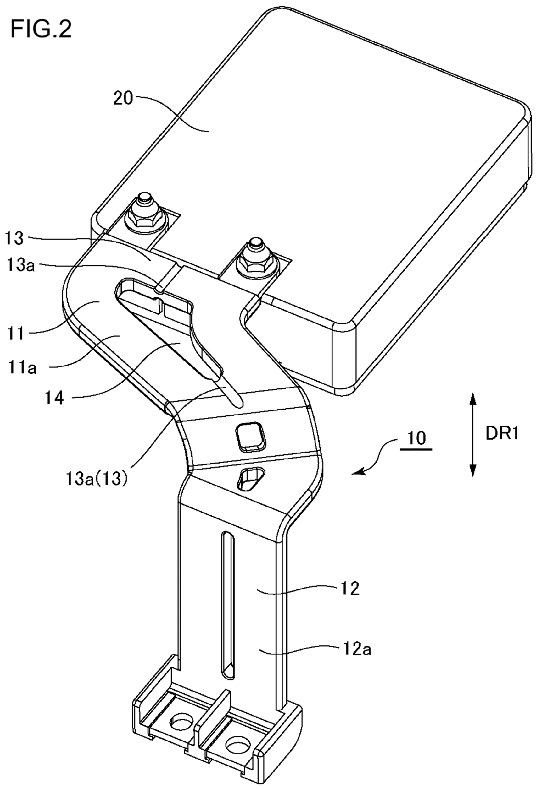

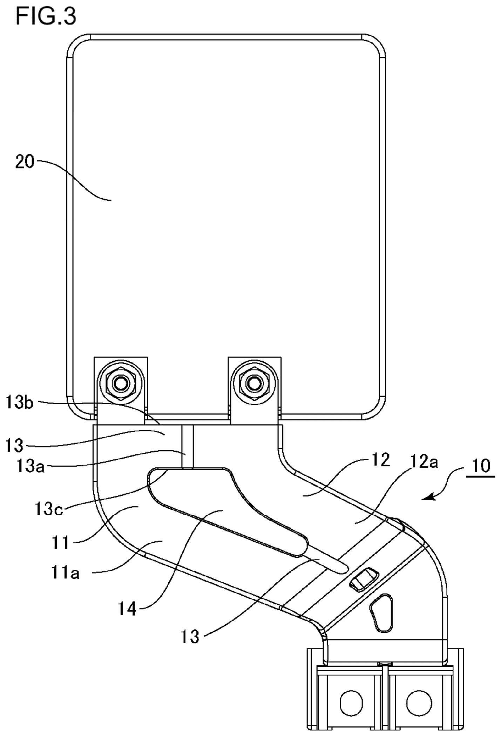

FIG. 2 is a schematic perspective view of the connection module 10 according to the first embodiment, in which a portion A in FIG. 1 is enlarged. FIG. 3 is a plan view when viewed from an upper direction in FIG. 2. The connection module 10 will be described with reference to FIGS. 2 and 3.

In the first embodiment, the connection module 10 electrically connects the junction box 20 and the connector 30. The connection module 10 is mold-formed and is coated with a resin.

The connection module 10 includes a first bus bar 11, a second bus bar 12, and a plurality of resin connecting portions 13. The first bus bar 11 and the second bus bar 12 have a plate-like shape. In the connection module 10, the first bus bar 11, the second bus bar 12, and the plurality of resin connecting portions 13 may be integrally molded.

The first bus bar 11 is composed of a metal portion and a resin portion, and the metal portion is coated with the resin portion (first resin 11a). The first bus bar 11 connects one terminal of the junction box 20 and one terminal of the connector 30.

The second bus bar 12 is composed of a metal portion and a resin portion, and the metal portion is coated with the resin portion (second resin 12a). The second bus bar 12 connects one terminal of the junction box 20 and one terminal of the connector 30.

The resin connecting portion 13 connects the first bus bar 11 and the second bus bar 12. The resin connecting portion 13 is connected to the first resin 11a and the second resin 12a. The resin connecting portion 13 is provided between the first bus bar 11 and the second bus bar 12. The resin connecting portion 13 may have a plate-like shape. The resin connecting portion 13 does not have a metal portion and is composed of a resin. By connecting the first bus bar 11 and the second bus bar 12 with the resin connecting portion 13, it is possible to efficiently transport the bus bars or to position the wiring between the battery modules, compared to assembling the battery pack without connecting the bus bars.

At least one of the first resin 11a, the second resin 12a, and the resin connecting portion 13 contains glass fibers. For example, the proportion of the glass fibers is 5% or more and 40% or less with respect to the total weight of the first resin 11a.

In the first embodiment, a groove 13a is formed in the resin connecting portion 13. In the first embodiment, the groove 13a extends in one direction. The groove 13a may be formed from one end portion 13b to the other end portion 13c of the resin connecting portion 13.

DR1 in FIG. 2 is a thickness direction DR1 of the resin connecting portion 13, and is a vertical direction. In the first embodiment, the thickness of the resin connecting portion 13 in the thickness direction DR1 (excluding the groove 13a portion) is equivalent to the thickness of the first bus bar 11 (including the first resin 11a). The thickness of the resin connecting portion 13 in the groove 13a portion is smaller than the thickness of the first bus bar 11. The depth of the groove 13a is preferably 75% or less, and more preferably 50% or less with respect to the thickness of the resin connecting portion 13. The lower limit of the thickness is not particularly limited, and it is sufficient that the first bus bar 11 and the second bus bar 12 are connected by the resin connecting portion 13. However, in order to maintain the strength of the resin connecting portion 13 when assembling the battery pack 1 or when transporting the components, it is preferably 10% or more, and more preferably 30% or more.

### (Space 14)

A space 14 is formed between the plurality of resin connecting portions 13. The space 14 is formed between the first bus bar 11 and the second bus bar 12. The space 14 is formed in a portion surrounded by the plurality of resin connecting portions 13, the first bus bar 11, and the second bus bar 12. In FIG. 2, there is a portion in which the groove 13a is not shown in the resin connecting portion 13 between the spaces 14, but the present invention is not limited thereto. The groove 13a may be formed in 80% or more of the length direction along the first bus bar 11 and the second bus bar 12 in the resin connecting portion 13, and more preferably formed in the entire resin connecting portion 13.

According to the first embodiment, the battery pack 1 includes the first bus bar 11, the second bus bar 12, and the plurality of resin connecting portions 13, and the space 14 is formed between the plurality of resin connecting portions 13. As a result, when the battery pack 1 (connection module 10) receives an impact from the outside, the stress is concentrated on the resin connecting portion 13, and the resin connecting portion 13 is likely to break. There is no metal portion inside the resin connecting portion 13. Therefore, even in a case where the connection module 10 receives an impact from the outside, it is possible to suppress the exposure of the metal portions of the first bus bar 11 and the second bus bar 12. Therefore, it is possible to suppress the short circuit.

Further, the groove 13a is formed in the resin connecting portion 13. As a result, when the battery pack 1 (connection module 10) receives an impact from the outside, the resin connecting portion 13 (more specifically, the groove 13a) is more likely to break.

Further, at least one of the first resin 11a, the second resin 12a, and the resin connecting portion 13 contains glass fibers. As a result, the strength of the connection module 10 is improved.

In addition, in the first embodiment, the thickness of the groove 13a is smaller than the thickness of the resin connecting portion 13. As the thickness of the resin increases, the possibility that air bubbles enter the inside of the molded resin connecting portion 13 increases, and the air bubbles may cause a decrease in the insulation properties between the two bus bars (the first bus bar 11 and the second bus bar 12). However, in the first embodiment, since the thickness of the groove 13a is smaller than the thickness of the resin connecting portion 13 of the bus bar, it is possible to suppress the entry of air bubbles. Therefore, it is possible to prevent a decrease in the insulation properties between the bus bars.

### <Second Embodiment>

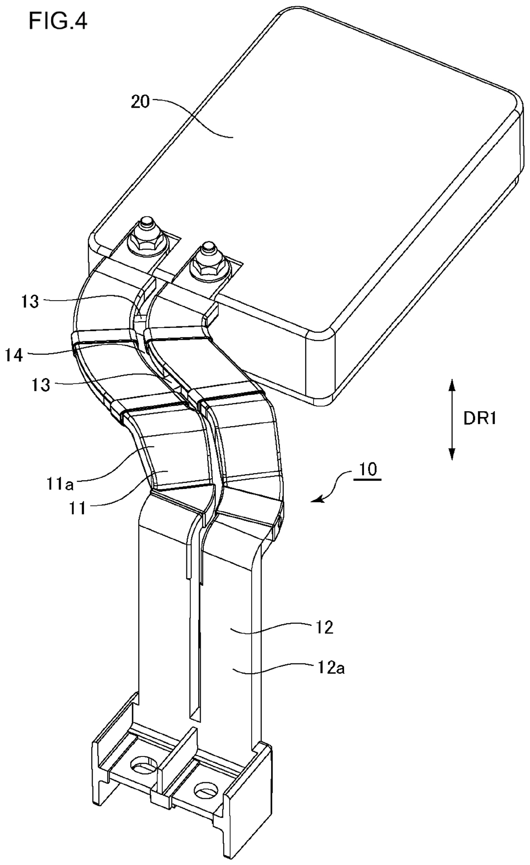

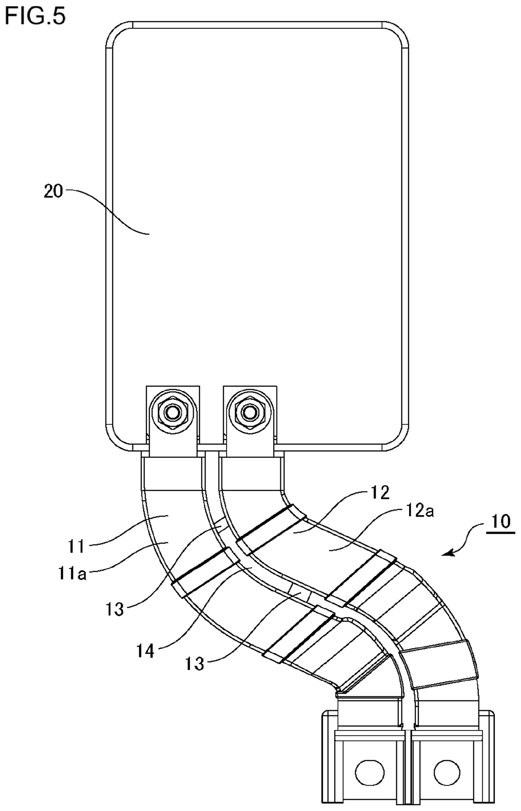

FIG. 4 is a schematic perspective view of the connection module 10 according to the second embodiment, in which a portion A in FIG. 1 is enlarged. FIG. 5 is a plan view when viewed from the upper direction of FIG. 4.

In the second embodiment as well, the connection module 10 includes a plurality of resin connecting portions 13, as in the first embodiment, but the thickness of the resin connecting portion 13 according to the second embodiment in the thickness direction DR1 is mainly different from that of the first embodiment in that the thickness is smaller than the thickness of the first bus bar 11 (including the first resin 11a) and the second bus bar 12 (including the second resin 12a).

As in the first embodiment, the resin connecting portion 13 according to the second embodiment is provided between the first bus bar 11 and the second bus bar 12, and connects the first bus bar 11 and the second bus bar 12. In addition, a space 14 is formed between the plurality of resin connecting portions 13 according to the second embodiment. The thickness of the resin connecting portion 13 according to the second embodiment is not particularly limited, and the first bus bar 11 and the second bus bar 12 may be connected by the resin connecting portion 13. However, in order to maintain the strength of the resin connecting portion when assembling the battery pack 1 or when transporting the components, for example, the thickness is 1.0 mm or more and 5.0 mm or less, and preferably 2.0 mm or more and 3.0 mm or less. It is preferable that the thickness of the resin connecting portion 13 according to the second embodiment is smaller than the thickness of the first bus bar 11 (including the first resin 11a) and the second bus bar 12 (including the second resin 12a) at all locations, but the present invention is not limited thereto, and the thickness may be smaller than the thickness of the first bus bar 11 (including the first resin 11a) and the second bus bar 12 (including the second resin 12a) at 80% or more of the entire resin connecting portion 13.

As described above, in the second embodiment as well, the thickness of the resin connecting portion 13 is smaller than the thickness of the first bus bar 11 and the thickness of the second bus bar 12. When two bus bars (the first bus bar 11 and the second bus bar 12) are mold-formed, there is a possibility that air bubbles may enter when the space between the two bus bars is filled with a large amount of resin. The air bubbles may cause a decrease in the insulation properties between the two bus bars. However, in the second embodiment, since the thickness of the resin connecting portion 13 is smaller than the thickness of the first bus bar 11 (second bus bar 12), it is possible to suppress the entry of air bubbles. Therefore, it is possible to prevent a decrease in the insulation properties between the bus bars.

Hereinabove, the embodiments of the present invention have been described with reference to the drawings. However, the embodiment is merely an example of the present invention, and various configurations other than the above-described configurations can also be adopted.

A through-hole penetrating in the thickness direction DR1 of the resin connecting portion 13 may be formed in the resin connecting portion 13. As a result, when the battery pack 1 (connection module 10) is subjected to an impact from the outside, the resin connecting portion 13 is more likely to break.

In addition, in the first embodiment, the connection module 10 electrically connects the junction box 20 and the connector 30. However, the connection module 10 may electrically connect, for example, a disconnect switch and the battery module 40.

In addition, in the embodiment, the battery pack 1 (battery module 40) may include a positive electrode terminal and a negative electrode terminal, and the connection module 10 may be used in at least one of a path that electrically connects the positive electrode terminal and the battery module 40 and a path that electrically connects the negative electrode terminal and the module.

In addition, the present invention is not limited thereto, and the connection module 10 can be applied in a case where two or more bus bars are disposed close to each other.

Hereinafter, examples of the reference forms will be added.
1. A connection module including:
   a first bus bar coated with a first resin;
   a second bus bar coated with a second resin; and
   a plurality of resin connecting portions that are made of a resin and that connect the first bus bar and the second bus bar,
   in which the resin connecting portion is connected to the first resin and the second resin, anda space is formed between the plurality of resin connecting portions.
2. The connection module according to 1.,
   in which a groove is formed in the resin connecting portion.
3. The connection module according to 2.,
   in which a depth of the groove is 30% or more and 50% or less with respect to a thickness of the resin connecting portion.
4. The connection module according to any one of 1. to 3.,
   in which a through-hole penetrating in a thickness direction of the resin connecting portion is formed in the resin connecting portion.
5. The connection module according to any one of 1. to 4.,
   in which a thickness of the resin connecting portion is smaller than a thickness of the first bus bar and a thickness of the second bus bar.
6. The connection module according to any one of 1. to 5.,
   in which a thickness of the resin connecting portion is 2.0 mm or more and 3.0 mm or less.
7. The connection module according to any one of 1. to 6.,
   in which at least one of the first resin, the second resin, or the resin connecting portion includes glass fibers.
8. A battery pack accommodating a battery module and including a positive electrode terminal and a negative electrode terminal,
   in which the connection module according to any one of 1. to 7. is used in at least one of a path electrically connecting the positive terminal and the battery module and a path electrically connecting the negative terminal and the battery module.

This application claims priority based on Japanese Patent Application No. 2023-179407 filed on October 18, 2023, the entirety of the disclosure of which is incorporated herein.

### REFERENCE SIGNS LIST

1 battery pack
10 connection module
11 first bus bar
11a first resin
12 second bus bar
12a second resin
13 resin connecting portion
13a groove
14 space

## Claims

1. A connection module comprising:
a first bus bar coated with a first resin;
a second bus bar coated with a second resin; and
a plurality of resin connecting portions that are made of a resin and that connect the first bus bar and the second bus bar,
wherein the resin connecting portion is connected to the first resin and the second resin, anda space is formed between the plurality of resin connecting portions.

2. The connection module according to Claim 1,
wherein a groove is formed in the resin connecting portion.

3. The connection module according to Claim 2,
wherein a depth of the groove is 30% or more and 50% or less with respect to a thickness of the resin connecting portion.

4. The connection module according to any one of Claims 1 to 3,
wherein a through-hole penetrating in a thickness direction of the resin connecting portion is formed in the resin connecting portion.

5. The connection module according to any one of Claims 1 to 3,
wherein a thickness of the resin connecting portion is smaller than a thickness of the first bus bar and a thickness of the second bus bar.

6. The connection module according to any one of Claims 1 to 3,
wherein a thickness of the resin connecting portion is 2.0 mm or more and 3.0 mm or less.

7. The connection module according to any one of Claims 1 to 3,
wherein at least one of the first resin, the second resin, and the resin connecting portion includes glass fibers.

8. A battery pack accommodating a battery module and including a positive terminal and a negative terminal,
wherein the connection module according to any one of Claims 1 to 3 is used in at least one of a path electrically connecting the positive terminal and the battery module and a path electrically connecting the negative terminal and the battery module.
